# EUROPÄISCHE PATENTSCHRIFT

(11) **EP 1 281 851 B1**
(45) Veröffentlichungstag und Bekanntmachung des Hinweises auf die Patenterteilung: **27.02.2008**
(21) Anmeldenummer: 02015737.6
(22) Anmeldetag: 13.07.2002
(51) Int. Cl.: F02D 31/00, F02D 33/02, F02D 41/08, F02D 29/06, F02D 11/10, F02D 17/00

(54) **Mehrzylindrige stationäre Brennkraftmaschine**
Stationary multi-cylinder combustion engine
Moteur à combustion stationnaire multicylindre

(30) Priorität: 03.08.2001 AT 12122001
(43) Veröffentlichungstag der Anmeldung: 05.02.2003
(73) Patentinhaber: GE Jenbacher GmbH & Co OHG, 6200 Jenbach (AT)
(72) Erfinder: Fahringer, Albert, 6345 Kössen (AT); Skorjanz, Peter, 3511 Paudorf (AT)
(74) Vertreter: Torggler, Paul Norbert

(56) Entgegenhaltungen:
- EP-A- 1 022 450
- US-A- 5 105 779
- PATENT ABSTRACTS OF JAPAN Bd. 1998, Nr. 11, 30. September 1998 (1998-09-30) & JP 10 176556 A (TOKYO GAS CO LTD), 30. Juni 1998 (1998-06-30)

## Beschreibung

Die Erfindung betrifft eine mehrzylindrige stationäre Brennkraftmaschine - insbesondere Gasottomotor - mit mindestens einer Drosselklappe und mit mindestens einem Verdichter - insbesondere Turbolader - zum Antrieb von mindestens einem Generator zur Erzeugung von elektrischem Strom oder zum Antrieb von einem anderen Verbraucher mechanischer Energie.

Eine solche Brennkraftmaschine ist zum Beispiel in der EP 1 022 450 A2 beschrieben. In dieser Schrift wird vorgeschlagen, beim Anfallen einer Last die Drosselklappe vollständig zu Öffnen und die Brennstoffzufuhr zu einem oder mehreren Zylindern kurzzeitig auszuschalten, womit ein erhöhter Gasdruck im Einlasssystem erreicht wird.

Gattungsgemäße Brennkraftmaschinen werden sowohl für die Versorgung von einzelnen lokalen Stromverbrauchern im sogenannten Inselbetrieb als auch zur Stromeinspeisung in das öffentliche Netz verwendet. Hierbei wird die Drehzahl der Brennkraftmaschinen über eine Leistungsregelung stabilisiert so lange der Generator, welcher von der Brennkraftmaschine angetrieben wird, mit dem öffentlichen Netz in Verbindung steht. Wird nun der Generator vom öffentlichen Netz getrennt oder werden im Inselbetrieb größere Stromverbraucher plötzlich abgeschaltet, so kommt es am Generator zum plötzlichen Lastabfall. Ähnliches gilt für das Abkoppeln der Brennkraftmaschine vom Generator oder andere plötzliche Änderungen der Betriebszustände. Um im Falle eines solchen Lastabfalls das Hochlaufen der Drehzahl der Brennkraftmaschine und damit ihre negative Beeinträchtigung bzw. Zerstörung zu verhindern, wird beim Stand der Technik die Drosselklappe kurzfristig vollständig geschlossen. In Folge dessen kommt es durch den noch auf hoher Leistung fahrenden Verdichter bzw. Turbolader zum sogenannten Verdichter- bzw. Turboladerpumpen, wenn der Verdichter in einem Arbeitspunkt mit viel Durchsatz auf der Ausgangsseite gedrosselt wird. Hierdurch entsteht wiederum die Gefahr von Verpuffungen im Abgastrakt. Dieser Vorgang des Turboladepumpens - einmal in Gang gesetzt - ist vollkommen unkontrollierbar und führt meist zum Gesamtverlust des Ladedrucks mit nachfolgender Abstellung der Brennkraftmaschine.

Um bei Brennkraftmaschinen, insbesondere Gasottomotoren, das Lastabschaltverhalten zu verbessern und das sogenannte Verdichter- bzw. Turboladerpumpen zu verhindern, ist es bereits bekannt, dem Verdichter ein Abblasventil nachzuschalten, um bei einem kurzfristigen Lastabwurf den Ladedruck ohne Turboladerpumpen abbauen zu können. Diese beim Stand der Technik bekannten Verfahrensweisen haben jedoch den Nachteil, daß sie zusätzliche Komponenten wie z.B. Abblasventile und die hierfür nötige Regeleinrichtung benötigen. Zum anderen wird durch das Abblasventil auch entzündbares Brennstoff-Luft-Gemisch freigesetzt, was wiederum die Notwendigkeit der sicheren Handhabung des abgeblasenen Brennstoff-Luft-Gemisches und damit einen zusätzlichen Aufwand bedeutet.

Aufgabe der Erfindung ist es somit eine Brennkraftmaschine der eingangs genannten Gattung zur Verfügung zu stellen, bei der das Lastabwurfverhalten konstruktiv einfach und unter Vermeidung der oben genannten Nachteile verbessert ist.

Dies wird erfindungsgemäß dadurch erreicht, daß die Brennkraftmaschine eine Regeleinrichtung aufweist, die zum Lastabwurf die Drosselklappe auf eine von der vollständigen Schließstellung abweichende zulässige Minimalschließstellung einstellt und zur Verhinderung von Überdrehzahl mindestens einen Zylinder abschaltet.

Somit ist erfindungsgemäß vorgesehen, daß die Regeleinrichtung die Drosselklappe nicht vollständig schließt sondern auf eine für den Betrieb zulässige Minimalschließstellung, welche eine gewisse Restöffnung beläßt, einstellt. Dadurch ist das ungewollte Auftreten des Verdichter- bzw. Turboladerpumpens wirkungsvoll verhindert. Um bei dieser Maßnahme eine Überdrehzahl der Brennkraftmaschine zu verhindern, ist darüber hinaus vorgesehen, daß ein oder mehrere Zylinder abgeschaltet werden. Durch diese von der Regeleinrichtung geregelte kombinierte Maßnahme wird ein Lastabwurf unter Vermeidung des nicht gewünschten Verdichter- bzw. Turboladerpumpens möglich, wobei keine zusätzlichen Komponenten wie z.B. Ablaßventile oder ähnliches nötig sind. Die erfindungsgemäße Regeleinrichtung stellt somit einen konstruktiv einfachen, aber sehr effektiven Weg zur Sicherstellung eines geregelten Lastabwurfs dar.

Hierbei ist wiederum in einer günstigen Variante vorgesehen, daß die Regeleinrichtung die abzuschaltenden Zylinder vorzugsweise einzeln nacheinander abschaltet und/oder die maximale Anzahl der abzuschaltenden Zylinder begrenzt ist. Hierbei wird durch die Begrenzung der Anzahl der abzuschaltenden Zylinder sichergestellt, daß nicht reines unverbranntes Gas-Luft-Gemisch bei der Abschaltung aller Zylinder im Abgastrakt vorhanden ist und somit ungewollte Verpuffungen verhindert sind. Durch die Möglichkeit, die Zylinder einzeln oder in Gruppen nacheinander abzuschalten ist eine sehr gute Anpassung der Zylinderabschaltung an den momentan Zustand der Brennkraftmaschine beim Lastabwurf möglich.

In einer günstigen Weiterbildungsform ist es vorgesehen, daß die Brennkraftmaschine eine Drosselklappenstellung-Berechnungseinrichtung aufweist, die die von der Regeleinrichtung einzustellende zulässige Minimalschließstellung in Abhängigkeit von mindestens einem Zustandsparameter der Brennkraftmaschine und/oder des Generators berechnet. Hierbei bildet die zulässige Minimalschließstellung eine untere Schranke für die Schließstellung der Drosselklappe, oberhalb derer die Regeleinrichtung die Drosselklappe frei regeln kann. Bei allen Regelvorgängen darf die Drosselklappe jedoch nicht weiter als die zulässige Minimalschließstellung geschlossen werden.

Bezüglich der für die Berechnung der zulässigen Minimalschließstellung verwendeten Zustandsparameter der Brennkraftmaschine bestehen grundsätzlich verschiedene Möglichkeiten. Günstige Varianten sehen vor, daß die Brennkraftmaschine mindestens eine Meßeinrichtung zur Messung der Drehzahl des Verdichters vorzugsweise Turboladers und/oder des aktuellen Ladedrucks hinter dem Verdichter und/oder der aktuellen Drehzahl der Brennkraftmaschine aufweist, wobei die Drosselklappenstellung - Berechnungseinrichtung die Minimalschließstellung in Abhängigkeit der Drehzahl des Verdichters und/oder des aktuellen Ladedrucks hinter dem Verdichter und/oder der aktuellen Drehzahl der Brennkraftmaschine berechnet.

Eine sehr präzise aber einfache Möglichkeit sieht vor, daß die Brennkraftmaschine mindestens eine Meßeinrichtung zur Messung der aktuellen Leistung der Brennkraftmaschine aufweist, wobei die Drosselklappenstellung-Berechnungseinrichtung die Minimalschließstellung in Abhängigkeit der gemessenen Leistung der Brennkraftmaschine berechnet.

Zur Festlegung der Anzahl der zur Vermeidung der Überdrehzahl abzuschaltenden Zylinder sieht eine günstige Variante vor, daß die Brennkraftmaschine eine Zylinderanzahl-Berechnungseinrichtung aufweist, die die Anzahl der von der Regeleinrichtung abzuschaltenden Zylinder in Abhängigkeit von mindestens einem Zustandsparameter der Brennkraftmaschine und/oder des Generators berechnet. Hierbei gibt es jeweils wiederum verschiedene Zustandsparameter, welche als Berechnungsgrundlage zur Zylinderabschaltung verwendet werden können. Günstige Varianten sehen vor, daß die Brennkraftmaschine mindestens eine Meßeinrichtung zur Messung der Drehzahl des Verdichters vorzugsweise Turboladers und/oder der aktuellen Leistung der Brennkraftmaschine und/oder des aktuellen Ladedrucks hinter dem Verdichter und/oder der aktuellen Drehzahl der Brennkraftmaschine aufweist, wobei die Zylinderanzahl-Berechnungseinrichtung die Anzahl der zur Verhinderung von Überdrehzahl abzuschaltenden Zylinder in Abhängigkeit der Drehzahl des Verdichters und/oder der aktuellen Leistung der Brennkraftmaschine und/oder des aktuellen Ladedrucks hinter dem Verdichter und/oder der aktuellen Drehzahl der Brennkraftmaschine berechnet.

Bezüglich der Sicherstellung der Vermeidung von Überdrehzahl sowie einer schnellen und präzisen Regelung ist es besonders günstig, daß die Brennkraftmaschine mindestens eine Meßeinrichtung zur Messung der aktuellen Drehzahl der Brennkraftmaschine aufweist, wobei die Zylinderanzahl-Berechnungseinrichtung die Anzahl der zur Verhinderung von Überdrehzahl abzuschaltenden Zylinder in Abhängigkeit der gemessenen Drehzahl der Brennkraftmaschine berechnet. Hierbei ist vorgesehen, daß beginnend bei einer bestimmten Motordrehzahl die Anzahl der abzuschaltenden Zylinder proportional zur Überdrehzahl berechnet wird.

Im Normalbetrieb wird die zulässige Drosselklappenstellung zustandsabhängig vom Motorregler berechnet und nach unten hin durch die zulässige Minimalstellung beschränkt. Im Falle eines schnellen Lastabwurfs ist es vorgesehen, die Drosselklappe möglichst schnell auf die berechnete Minimalstellung einzustellen.

Bezüglich der Erkennung von Lastabwürfen durch die Regeleinrichtung sieht eine grundlegende Variante vor, daß die Regeleinrichtung bei vorab vorgebbaren Drehzahlschwankungen der Brennkraftmaschine die Drosselklappe auf eine Minimalschließstellung einstellt und zur Verhinderung von Überdrehzahl mindestens einen Zylinder abschaltet. Zur Erkennung eines Lastabwurfs können jedoch bei Brennkraftmaschinen mit mindestens einem den Generator mit einem lokalen Stromnetz verbindenden Generatorschalter und/oder mit mindestens einem den Generator mit einem öffentlichen Stromnetz verbindenden Netzschalter vorgesehen sein, daß die jeweiligen Stellungen des Generatorschalters bzw. Netzschalters auch als Regelgröße der Regeleinrichtung zur Erkennung eines Lastabwurfs zur Verfügung gestellt werden. Bei diesen Varianten ist somit vorgesehen, daß die Regeleinrichtung bei vorab vorgebbaren Drehzahlschwankungen der Brennkraftmaschine und/oder Änderungen der Stellung des Generatorschalters und/oder des Netzschalters die Drosselklappe auf eine Minimalschließstellung einstellt und zur Verhinderung von Überdrehzahl mindestens einen Zylinder abschaltet.

Nach erfolgtem Lastabwurf ist es vorgesehen, daß die Regeleinrichtung nach dem Lastabwurf die abgeschalteten Zylinder vorzugsweise einzeln nacheinander, in Abhängigkeit mindestens eines Zustandsparameters der Brennkraftmaschine oder des Generators wieder zuschaltet, wobei vorzugsweise die Drosselklappe während des Zylinderzuschaltens in Minimalschließstellung eingestellt verbleibt. Eine günstige Variante hierbei sieht wiederum vor, daß die Regeleinrichtung die abgeschalteten Zylinder in Abhängigkeit der Drehzahl der Brennkraftmaschine wieder zuschaltet.

Weitere Merkmale und Einzelheiten der vorliegenden Erfindung ergeben sich aus der nachfolgenden Figurenbeschreibung. Dabei zeigt:
Fig. 1 eine schematische Darstellung einer erfindungsgemäßen Brennkraftmaschine
Fig. 2 eine schematische Darstellung zum zeitlichen Ablauf der erfindungsgemäßen Regelung und
Fig. 3 ein Regeldiagramm.

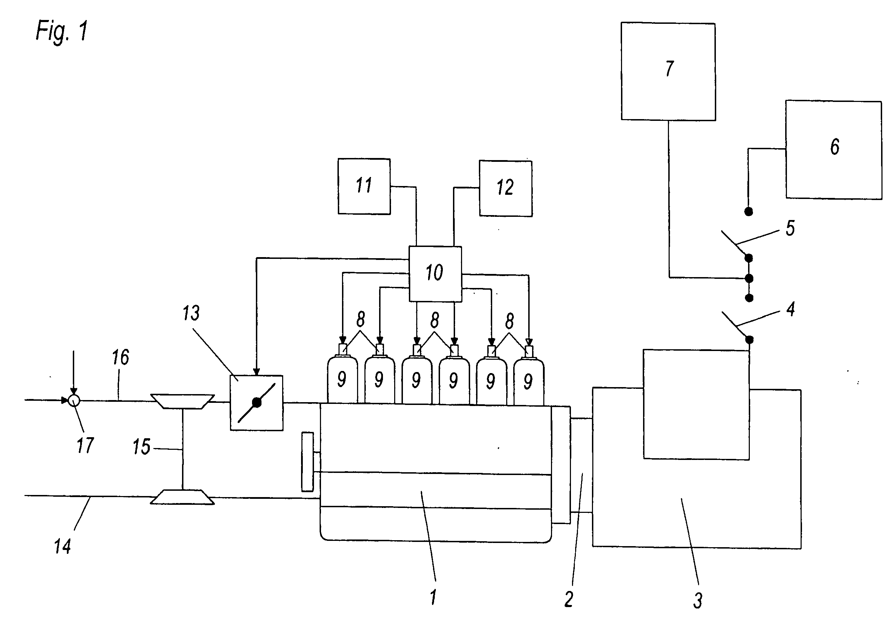

In Fig. 1 treibt eine Brennkraftmaschine 1 im vorliegenden Beispiel ein Gasottomotor über eine Kupplung 2 einen Generator 3 an. Hierbei ist im dargestellten Beispiel vorgesehen, daß dieser Generator 3 sowohl ein öffentliches Stromnetz 6 als auch ein lokales Netz 7 bzw. lokale Verbraucher mit Strom versorgt. In der Zuleitung zum lokalen Netz 7 ist der Generatorschalter 4 in der Zuleitung zum öffentlichen Netz 6 ist zusätzlich ein Netzschalter 5 angeordnet. Sind der Netzschalter 5 und der Generatorschalter 4 geschlossen, so ist die Brennkraftmaschine 1 über das öffentliche Netz 6 leistungsgesteuert. Ist der Netzschalter 5 geöffnet und der Generatorschalter 4 geschlossen, so arbeitet die Anordnung aus Generator 3 und Brennkraftmaschine 1 im sogenannten Inselbetrieb mit einer Drehzahlsteuerung der Brennkraftmaschine. Hierbei können in der Regel starke Schwankungen der vom Generator abgeforderten Leistungen auftreten. Ein Lastabwurf tritt immer dann auf, wenn die vom Generator abgeforderte Leistung plötzlich verringert wird. Dies kann z.B. durch das öffnen des Netzschalters 5 oder des Generatorschalters 4, aber auch durch das Öffnen der Kupplung 2, geschehen. Darüber hinaus ist im Inselbetrieb auch ein Lastabwurf an der Brennkraftmaschine nötig, wenn ein dominanter lokaler Verbraucher im lokalen Netz 7 plötzlich abgeschaltet wird. Grundsätzlich ist vorgesehen, daß die Regeleinrichtung 10 über hier nicht weiter dargestellte Sensoren und Leitungen überwacht, ob die von der Brennkraftmaschine abgeforderte Leistung anwächst oder abnimmt.

Die Brennkraftmaschine 1 weist mehrere Zylinder 9 mit jeweils zugeordneten Zündungen 8 auf. Die Zündungen 8 werden durch die Regeleinrichtung 10 angesteuert. Darüber hinaus ist die Regeleinrichtung 10 über eine Leitung mit der Drosselklappe 13 verbunden, über die sowohl Signale bezüglich der momentanen Stellung der Drosselklappe als auch Regelsignale zur Einstellung der Drosselklappenstellung übertragen werden. Die Regeleinrichtung 10 ist darüber hinaus mit einer Drosselklappen-Berechnungseinrichtung 11 und einer Zylinderanzahl-Berechnungseinrichtung 12 verbunden.

Das Brennstoff-Gasgemisch wird im Mischer 17 gemischt und über die Zufuhrleitung 16 der Zufuhrseite des Verdichters 15 vorzugsweise eines Turboladers zugeführt. Der Verdichter 15 verdichtet das Brennstoff-Luftgemisch vor der Drosselklappe 13, wobei das verdichtete Brennstoff-Luftgemisch den Zylindern 9 der Brennkraftmaschine 1 über die Drosselklappe 13 zugeführt wird. In der Abgasleitung 14 ist wie beim Stand der Technik bekannt, die Antriebsturbine des Verdichters 15 angeordnet.

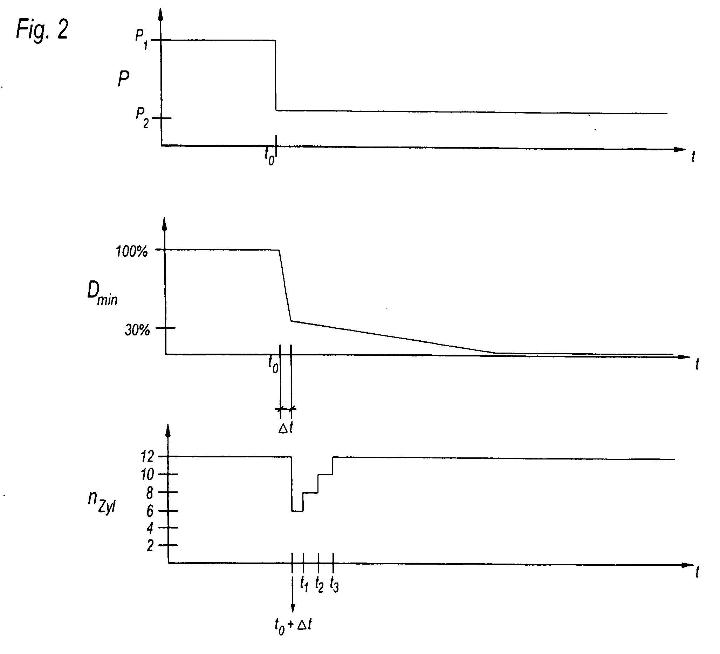

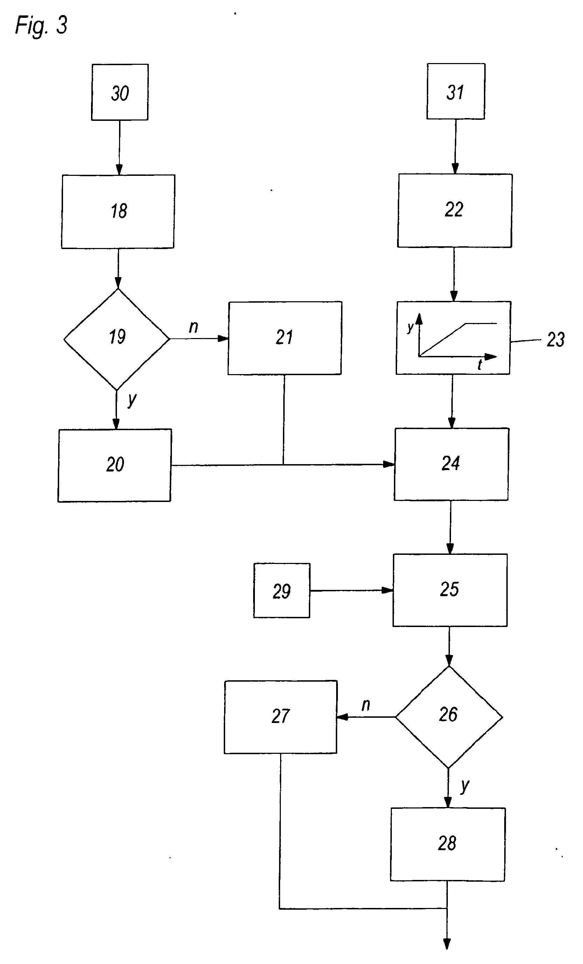

Wie in den Fig. 2 und 3 detaillierter dargestellt, überwacht die Regeleinrichtung 10 über, in Fig. 1 nicht weiter dargestellte, Signalleitungen die Stellung der Schalter 4 und 5, der Kupplung 2 sowie die Drehzahl der Brennkraftmaschine 1 um einen Lastabwurf zu erkennen. Die Drosselklappen-Berechnungseinrichtung 11 berechnet für die Regeleinrichtung 10 ständig in Abhängigkeit von mindestens einem Zustandsparameter der Brennkraftmaschine eine im aktuellen Motorzustand zulässige Drosselklappen-Minimalstellung, die nicht unterschritten werden darf. Diese Zustandsparameter der Brennkraftmaschine 1 werden über hier nicht weiter dargestellte Meßeinrichtungen und Signalleitungen der Drosselklappenstellung-Berechnungseinrichtung 11 zur Verfügung gestellt. Als mögliche Zustandsparameter zur Berechnung der Drosselklappen-Minimalschließstellung sind die Drehzahl des Verdichters 15 und/oder die aktuelle Leistung der Brennkraftmaschine und/oder der aktuelle Ladedruck hinter dem Verdichter und/oder die aktuelle Drehzahl der Brennkraftmaschine vorgesehen. Wird ein Lastabwurf von der Regeleinrichtung 10 detektiert, so wird von dieser die von der Drosselklappen-Berechnungseinrichtung 11 berechnete zulässige Minimalschließstellung der Drosselklappe eingestellt.

Die Zylinderanzahl-Berechnungseinrichtung 12 überwacht über hier ebenfalls nicht dargestellte aber beim Stand der Technik bekannte Signalleitungen und Sensoren ebenfalls die Drehzahl des Verdichters 15 und/oder die aktuelle Motorleistung der Brennkraftmaschine und/oder den aktuellen Ladedruck hinter dem Verdichter 15 und/oder die aktuelle Drehzahl der Brennkraftmaschine 1, um daraus die zur Verhinderung einer Überdrehzahl nötige Anzahl der abzuschaltenden Zylinder zu berechnen. Die von der Drosselklappenstellung-Berechnungseinrichtung 11 und der Zylinderanzahl-Berechnungseinrichtung 12 berechneten Werte werden der Regeleinrichtung 10 zur Verfügung gestellt. Die Regeleinrichtung 10 stellt die berechnete zulässige Minimalschließstellung ein und schaltet, vorzugsweise wenn die zulässige Minimalschließstellung der Drosselklappe 13 erreicht ist, die berechnete Anzahl der Zylinder 9 der Brennkraftmaschine 1 ab. Das Abschalten kann hierbei einzeln oder in Gruppen nacheinander erfolgen. Günstigerweise erfolgt das Abschalten der Zylinder 9 über das Abschalten der jedem Zylinder 9 zugeordneten Zündung 8. Grundsätzlich sind hier jedoch auch andere beim Stand der Technik bekannte Varianten des Zylinderabschaltens einsetzbar. Durch das nicht vollständige Schließen der Drosselklappe 13 wird ein Verdichter- bzw. Turboladerpumpen beim Lastabwurf vermieden. Zur Verhinderung der Überdrehzahl werden erfindungsgemäß hierzu ein oder mehrere Zylinder 9 abgeschaltet. Die Drosselklappenstellung-Berechnungseinrichtung 11 und die Zylinderanzahl-Berechnungseinrichtung 12 können im Gegensatz zur in Fig. 1 gewählten Darstellung auch in die Regeleinrichtung 10 inkludiert sein.

Fig. 2 zeigt einen schematisch dargestellten Lastabwurf sowie die von der Regeleinrichtung 10 durchgeführten Regelungen im zeitlichen Verlauf t der am Generator 3 abgeforderten Leistung P, der zulässigen Minimalschließstellung Dₘᵢₙ der Drosselklappe 13 (angegeben als relative Öffnungsweite) und der Anzahl n_{zyl} der momentan im Betrieb befindlichen Zylinder 9. Vor dem Lastabwurf zur Zeit t₀ wird vom Generator 3 die Last P₁ abgenommen. Zum Zeitpunkt t₀ des Lastabwurfs verringert sich die Leistung P von P₁ auf P₂. Dieser Lastabwurf kann z.B. durch das Öffnen des Generatorschalters 4 oder des Netzschalters 5 oder durch Öffnen der Kupplung 2 oder durch ein Abschalten eines lokalen Verbrauchers im lokalen Stromnetz 7 hervorgerufen werden. Als Reaktion auf diesen Lastabwurf wird die von der Drosselklappenstellung-Berechnungseinrichtung 11 auf der Basis eines oder mehrerer der oben genannten Zustandsparameter der Brennkraftmaschine 1 berechnete Minimalschließstellung der Drosselklappe 13 von der Regeleinrichtung 10 eingestellt. Im in Fig. 2 dargestellten Beispiel stellt die Regeleinrichtung 10 die vor dem Lastabwurf zur Zeit t₀ auf 100 % Öffnung gestellte Drosselklappe auf eine zulässige Minimalschließstellung von 30 % Öffnung ein. Die zulässige Minimalschließstellung wird durch die Drosselklappenstellung-Berechnungseinrichtung als Folge der Zustandsänderung des Motors korrigiert. Zur Verhinderung der Überdrehzahl wird erfindungsgemäß zum Zeitpunkt t_{0+Δ}t die von der Zylinderanzahl-Berechnungseinrichtung in Abhängigkeit eines oder mehrerer oben genannter Zustandsgrößen der Brennkraftmaschine 1 berechnete, Anzahl von Zylindern 9 abgeschaltet. Im in Fig. 2 dargestellten Beispiel verringert die Regeleinrichtung 10 die Anzahl n_{zyl} der aktiv arbeitenden Zylinder von 12 auf 6. Nach dem Lastabwurf und dem damit verbundenen Abschalten von sechs Zylindern zum Zeitpunkt t₀ werden im dargestellten Beispiel jeweils zwei Zylinder zu den Zeiten t₁, t₂ und t₃, vorzugsweise in Abhängigkeit der momentanen Drehzahl der Brennkraftmaschine wieder zugeschaltet bis schließlich wieder die vollständige Anzahl von Zylindern 9 der Brennkraftmaschine 1 arbeitet. Grundsätzlich erfolgt nach dem Lastabwurf zur Zeit t₀ wieder eine Anpassung der Drosselklappenstellung und der Anzahl der aktiv arbeitenden Zylinder n_{zyl} an den sich neu eingestellten Betriebszustand des Motors, sodaß das in Fig. 2 dargestellte Beispiel nur eine von vielen Möglichkeiten des Betriebes nach dem Lastabwurf zur Zeit t₀ darstellt. Im dargestellten Beispiel in Fig. 2 verringert sich der Druck hinter dem Turbolader und vor der Drosselklappe nach dem Lastabwurf in dem Maße, daß Dₘᵢₙ weiter absinkt. Dies bedeutet jedoch nicht, daß die Drosselklappe automatisch weiter geschlossen wird, da Dₘᵢₙ nur die zulässige Untergrenze für das Schließen der Drosselklappe durch die Regeleinrichtung ist. Nach dem erfolgten Lastabwurf regelt die Regeleinrichtung die Drosselklappenstellung weiterhin gemäß den beim Normalbetrieb üblichen Regelkriterien wobei Dₘᵢₙ lediglich als untere Schranke dient.

Fig. 3 zeigt schematisch einen möglichen Ablauf der erfindungsgemäßen Regelung. Zunächst wird an Position 18 die Anzahl der abzuschaltenden Zylinder von der Zylinderanzahl-Berechnungseinrichtung 12 in Abhängigkeit mindestens eines Zustandsparameters 30 der Brennkraftmaschine 1 berechnet. Anschließend wird in Position 19 zur Position 21 geschaltet und damit die Drosselklappe freigegeben, wenn kein Zylinder abgeschaltet werden soll oder zur Position 20 geschaltet, wobei die Drosselklappe auf der zulässigen Minimalschließstellung festgehalten wird, wenn die berechnete Anzahl der abzuschaltenden Zylinder größer 0 ist. In Position 22 wird in Abhängigkeit der Zustandsparameter 31 die zulässige Drosselklappenöffnung für den Stationärzustand vorgegeben. In Position 23 wird für instationäre Betriebszustände in Abhängigkeit dieser Parameter eine Verzögerungsrampe für die zulässige Minimalstellung der Drosselklappe berechnet. Beide bisher behandelten Stränge vereinigen sich im Punkt 24, wobei hier die Grenzen der Drosselklappe somit vorgegeben sind. In Punkt 25 erfolgt anschließend die Berechnung der Schließstellung der Drosselklappe 13 in Abhängigkeit der Eingabeparameter aus Punkt 24 und Eingabeparametern 29. Diese Eingabeparameter 29 können die Drehzahl des Motors, die abgeforderte elektrische Energie sowie die Betriebsart der Brennkraftmaschine sein. Nach der Berechnung der Position der Drosselklappe in Punkt 25 wird in Punkt 26 in Abhängigkeit der berechneten Anzahl der abzuschaltenden Zylinder und der Frage, ob die Drosselklappe 13 auf der berechneten Minimalstellung eingestellt ist, entschieden, ob die berechnete Anzahl von Zylindern abgeschaltet wird oder nicht. Ist die Voraussetzung nicht gegeben, so wird in Position 27 kein Zylinder abgeschaltet. Ist die Voraussetzung in Position 26 gegeben, so wird in Position 28 die berechnete Anzahl von Zylindern abgeschaltet.

## Patentansprüche

1. Mehrzylindrige stationäre Brennkraftmaschine mit mindestens einer Drosselklappe und mit mindestens einem Verdichter zum Antrieb von mindestens einem Generator zur Erzeugung von elektrischem Strom oder zum Antrieb von mindestens einem anderen Verbraucher mechanischer Energie, **dadurch gekennzeichnet, daß** die Brennkraftmaschine (1) eine Regeleinrichtung (10) aufweist, die zum Lastabwurf die Drosselklappe (13) auf eine von der vollständigen Schließstellung abweichende zulässige Minimalschließstellung einstellt und zur Verhinderung von Überdrehzahl mindestens einen Zylinder (9) abschaltet.

2. Brennkraftmaschine nach Anspruch 1, **dadurch gekennzeichnet, daß** sie eine Drosselklappenstellung-Berechnungseinrichtung (11) aufweist, die die von der Regeleinrichtung (10) einzustellende zulässige Minimalschließstellung in Abhängigkeit von mindestens einem Zustandsparameter der Brennkraftmaschine (1) und/oder des Generators (3) berechnet.

3. Brennkraftmaschine nach Anspruch 2, **dadurch gekennzeichnet, daß** sie mindestens eine Meßeinrichtung zur Messung der Drehzahl des Verdichters (15) vorzugsweise Turboladers und/oder des aktuellen Ladedrucks hinter dem Verdichter (15) und/oder der aktuellen Drehzahl der Brennkraftmaschine (1) aufweist, wobei die Drosselklappenstellung- Berechnungseinrichtung (11) die zulässige Minimalschließstellung in Abhängigkeit der Drehzahl des Verdichters (15) und/oder des aktuellen Ladedrucks hinter dem Verdichter (15) und/oder der aktuellen Drehzahl der Brennkraftmaschine (1) berechnet.

4. Brennkraftmaschine nach Anspruch 2, **dadurch gekennzeichnet, daß** sie mindestens eine Meßeinrichtung zur Messung der aktuellen Leistung der Brennkraftmaschine (1) aufweist, wobei die Drosselklappenstellung-Berechnungseinrichtung (11) die zulässige Minimalschließstellung in Abhängigkeit der gemessenen Leistung der Brennkraftmaschine (1) berechnet.

5. Brennkraftmaschine nach einem der Ansprüche 1 bis 4, **dadurch gekennzeichnet, daß** sie eine Zylinderanzahl-Berechnungseinrichtung (12) aufweist, die die Anzahl der von der Regeleinrichtung (10) abzuschaltenden Zylinder (9) in Abhängigkeit von mindestens einem Zustandsparameter der Brennkraftmaschine (1) und/oder des Generators (3) berechnet.

6. Brennkraftmaschine nach Anspruch 5, **dadurch gekennzeichnet, daß** sie mindestens eine Meßeinrichtung zur Messung der Drehzahl des Verdichters (15) vorzugsweise Turboladers und/oder der aktuellen Leistung der Brennkraftmaschine (1) und/oder des aktuellen Ladedrucks hinter dem Verdichter (15) und/oder der aktuellen Drehzahl der Brennkraftmaschine (1) aufweist, wobei die Zylinderanzahl-Berechnungseinrichtung (12) die Anzahl der zur Verhinderung von Überdrehzahl abzuschaltenden Zylinder (9) in Abhängigkeit der Drehzahl des Verdichters (15) und/oder der aktuellen Leistung der Brennkraftmaschine (1) und/oder des aktuellen Ladedrucks hinter dem Verdichter und/oder der aktuellen Drehzahl der Brennkraftmaschine (1) berechnet.

7. Brennkraftmaschine nach Anspruch 5, **dadurch gekennzeichnet, daß** sie mindestens eine Meßeinrichtung zur Messung der aktuellen Drehzahl der Brennkraftmaschine (1) aufweist, wobei die Zylinderanzahl-Berechnungseinrichtung (12) die Anzahl der zur Verhinderung von Überdrehzahl abzuschaltenden Zylinder (9) in Abhängigkeit der gemessenen Drehzahl der Brennkraftmaschine (1) berechnet.

8. Brennkraftmaschine nach einem der Ansprüche 1 bis 7, **dadurch gekennzeichnet, daß** die maximale Anzahl der abzuschaltenden Zylinder (9) begrenzt ist.

9. Brennkraftmaschine nach einem der Ansprüche 1 bis 8, **dadurch gekennzeichnet, daß** die Regeleinrichtung (10) die abzuschaltenden Zylinder (9) vorzugsweise einzeln nacheinander abschaltet.

10. Brennkraftmaschine mit mindestens einem den Generator mit einem lokalen Stromnetz verbindenden Generatorschalter und/oder mit mindestens einem den Generator mit einem öffentlichen Stromnetz verbindenden Netzschalter nach einem der Ansprüche 1 bis 9, **dadurch gekennzeichnet, daß** die Regeleinrichtung (10) bei vorab vorgebbaren Drehzahlschwankungen der Brennkraftmaschine (1) und/oder Änderungen der Stellung des Generatorschalters (4) und/oder des Netzschalters (5) die Drosselklappe (13) auf eine Minimalschließstellung einstellt und zur Verhinderung von Überdrehzahl mindestens einen Zylinder (9) abschaltet.

11. Brennkraftmaschine nach einem der Ansprüche 1 bis 10, **dadurch gekennzeichnet, daß** die Regeleinrichtung (10) bei vorab vorgebbaren Drehzahlschwankungen der Brennkraftmaschine (1) die Drosselklappe (13) auf eine Minimalschließstellung einstellt und zur Verhinderung von Überdrehzahl mindestens einen Zylinder (9) abschaltet.

12. Brennkraftmaschine nach einem der Ansprüche 1 bis 11, **dadurch gekennzeichnet, daß** die Regeleinrichtung (10) nach dem Lastabwurf die abgeschalteten Zylinder (9) vorzugsweise einzeln nacheinander, in Abhängigkeit mindestens eines Zustandsparameters der Brennkraftmaschine (1) oder des Generators (3) wieder zuschaltet, wobei vorzugsweise die Drosselklappe (13) während des Zylinderzuschaltens in Minimalschließstellung eingestellt verbleibt.

13. Brennkraftmaschine nach Anspruch 12, **dadurch gekennzeichnet, daß** die Regeleinrichtung (10) die abgeschalteten Zylinder (9) in Abhängigkeit der Drehzahl der Brennkraftmaschine (1) wieder zuschaltet

14. Brennkraftmaschine nach einem der Ansprüche 1 bis 13, **dadurch gekennzeichnet, dass** sie ein Gasottomotor ist.

15. Brennkraftmaschine nach einem der Ansprüche 1 bis 14, **dadurch gekennzeichnet, dass** der Verdichter ein Turbolader ist.

## Claims

1. Multi-cylinder stationary internal combustion engine with at least one throttle valve and with at least one compressor for driving at least one generator fort he production of electric current or for driving at least one other consumer of mechanical energy, **characterized in that** the internal combustion engine (1) contains a regulator (10) which, fort he shedding of load, sets the throttle valve (13) to a permissible minimum-closure position which differs from the completely closed position and disconnects at least one cylinder (9) in order to prevent overspeed.

2. Internal combustion engine according to claim 1, **characterized in that** it contains a device (11) for calculating the position of the throttle valve, which calculates the permissible minimum-closure position to be set by the regulator (10) according to at least one parameter defining the state of the internal combustion engine (1) and/or of the generator (3).

3. Internal combustion engine according to claim 2, **characterized in that** it contains at least one measuring device for measuring the speed of the compressor (15) preferably turbo-supercharger and/or the current speed of the internal combustion engine (1) the device (11) for calculating the position of the throttle valve calculating the permissible minimum-closure position according the speed of the compressor (15) and/or the current supercharging pressure behind the compressor (15) and/or the current speed of the internal combustion engine (1).

4. Internal combustion engine according to claim 2, **characterized in that** it contains at least one measuring device for measuring the current output of the internal combustion engine (1), the device (11) for calculating the position of the throttle valve calculating the permissible minimum-closure position according to the measured output of the internal combustion engine (1).

5. Internal combustion engine according to one of claims 1 to 4, **characterized in that** it contains a device (12) for calculating the number of cylinders, which calculates the number of cylinders (9) to be disconnected by the regulator (10) according to at least one parameter defining the state of the internal combustion engine (1) and/or of the generator (3).

6. Internal combustion engine according to claim 5, **characterized in that** it contains at least one measuring device for measuring the speed of the compressor (15) preferably turbo-supercharger and/or the current output of the internal combustion engine (1) and/or the current supercharging pressure behind the compressor (15) and/or the current speed of the internal combustion engine (1), the device (12) for calculating the number of cylinders calculating the number of cylinders (9) to be disconnected for the prevention of overspeed according to the speed of the compressor (15) and/or the current output of the internal combustion engine (1) and/or the current supercharging pressure behind the compressor and/or the current speed of the internal combustion engine (1).

7. Internal combustion engine according to claim 5, **characterized in that** it contains at least one measuring device for measuring the current speed of the internal combustion engine (1), the device (12) for calculating the number of cylinders calculating the number of cylinders (9) to be disconnected for the prevention of overspeed according to the measured speed of the internal combustion engine (1).

8. Internal combustion engine according to one of claims 1 to 7, **characterized in that** the maximum number of cylinders (9) to be disconnected is limited.

9. Internal combustion engine according to one of claims 1 to 8, **characterized in that** the regulator (1=9 preferably disconnects the cylinders (9) to be disconnected one after another.

10. Internal combustion engine with at least one generator switch connecting the generator to a local power supply system and/or with at least one mains switch connecting the generator to a public mains supply according to one of claims 1 to 9, **characterized in that** the regulator (10), in the case of pre-settable fluctuations in the speed of the internal combustion engine (1) and/or changes in the position of the generator switch (4) and/or of the mains switch (6), sets the throttle valve (13) to a minimum-closure position and disconnects at least one cylinder (9) in order to prevent overspeed.

11. Internal combustion engine according to one of claims 1 to 10, **characterized in that** the regulator (10), in the case of pre-settable fluctuations in the speed of the internal combustion engine (1), sets the throttle valve (13) to a minimum-closure position and disconnects at least one cylinder (9) in order to prevent overspeed.

12. Internal combustion engine according to one of claims 1 to 11, **characterized in that** the regulator (10), after the shedding of load, preferably reconnects the disconnected cylinders (9) indi8vidually one after another, according to at least one parameter defining the state of the internal combustion engine (1) or of the generator (3), the throttle valve (13) preferably remaining set in minimum-closure position during the connection of cylinders.

13. Internal combustion engine according to claim 12 **characterized in that** the regulator (10) reconnects the disconnected cylinders (9) according to the speed of the internal combustion engine (1).

14. Internal combustion engine according to one of claims 1 to 13, **characterized in that** it is a gas Otto engine.

15. Internal combustion engine according to one of claims 1 to 14, **characterized in that** the compressor is a turbo-supercharger.

## Revendications

1. Moteur à combustion interne, stationnaire multicylindre comportant au moins un clapet d'étranglement et au moins un compresseur destiné à l'entraînement d'au moins un générateur destiné à générer du courant électrique, ou destiné à l'entraînement d'au moins un autre appareil consommateur d'énergie mécanique, **caractérisé en ce que** le moteur à combustion interne (1) présente un dispositif de réglage (10), qui règle, pour le délestage, le clapet d'étranglement (13) sur une position de fermeture minimale admissible, différente de la position de fermeture complète, et **en ce qu'**il arrête au moins un cylindre (9) pour empêcher toute survitesse.

2. Moteur à combustion interne selon la revendication 1, **caractérisé en ce qu'**il présente un dispositif de calcul de position du clapet d'étranglement (11), lequel dispositif calcule la position de fermeture minimale admissible à régler par le dispositif de réglage (10) en fonction d'au moins un paramètre d'état du moteur à combustion interne (1) et/ou du générateur (3).

3. Moteur à combustion interne selon la revendication 2, **caractérisé en ce qu'**il présente au moins un dispositif de mesure destiné à mesurer la vitesse de rotation du compresseur (15), de préférence du turbocompresseur, et/ou de la pression d'admission actuelle après le compresseur (15) et/ou la vitesse actuelle du moteur à combustion interne (1), le dispositif de calcul de position du clapet d'étranglement (11) calculant la position de fermeture minimale admissible en fonction de la vitesse du compresseur (15) et/ou de la pression d'admission après le compresseur (15) et/ou la vitesse actuelle du moteur à combustion interne (1).

4. Moteur à combustion interne selon la revendication 2, **caractérisé en ce qu'**il présente au moins un dispositif de mesure destiné à mesurer la puissance actuelle du moteur à combustion interne (1), le dispositif de calcul de position du clapet d'étranglement (11) calculant la position de fermeture minimale admissible en fonction de la puissance mesurée du moteur à combustion interne (1).

5. Moteur à combustion interne selon l'une quelconque des revendications 1 à 4, **caractérisé en ce qu'**il présente un dispositif de calcul du nombre de cylindres (12), legue7. calcule le nombre de cylindres (9) devant être arrêtés par le dispositif de réglage (10) en fonction d'au moins un paramètre d'état du moteur à combustion interne (1) et/ou du générateur (3).

6. Moteur à combustion interne selon la revendication 5, **caractérisé en ce qu'**il présente au moins un dispositif de mesure destiné à mesurer la vitesse du compresseur (15), de préférence du turbocompresseur, et/ou la puissance actuelle du moteur à combustion interne (1) et/ou la pression d'admission actuelle après le compresseur (15) et/ou la vitesse actuelle du moteur à combustion interne (1), le dispositif de calcul du nombre de cylindres (12) calculant le nombre de cylindres (9) devant être arrêtés pour empêcher toute survitesse en fonction de la vitesse du compresseur (15) et/ou de la puissance actuelle du moteur à combustion interne (1) et/ou de la pression d'admission actuelle après le compresseur et/ou de la vitesse actuelle du moteur à combustion interne (1).

7. Moteur à combustion interne selon la revendication 5, **caractérisé en ce qu'**il présente au moins un dispositif de mesure destiné à mesurer la vitesse actuelle du moteur à combustion interne (1), le dispositif de calcul du nombre de cylindres (12) calculant le nombre de cylindres (9) devant être arrêtés pour empêcher toute survitesse en fonction de la vitesse mesurée du moteur à combustion interne (1).

8. Moteur à combustion interne selon l'une quelconque des revendications 1 à 7, **caractérisé en ce que** le nombre maximal de cylindres (9) devant être arrêtés est limité.

9. Moteur à combustion interne selon l'une quelconque des revendications 1 à 8, **caractérisé en ce que** le dispositif de réglage (10) arrête les cylindres (9) devant être arrêtés, de préférence les uns après les autres.

10. Moteur à combustion interne comportant au moins un interrupteur de générateur reliant le générateur à un réseau électrique local, et/ou comportant au moins un interrupteur secteur reliant le générateur à un réseau électrique public selon l'une quelconque des revendications 1 à 9, **caractérisé en ce que** le dispositif de réglage (10) en cas de variations de vitesse du moteur à combustion interne (1) pouvant être prédéfinies à l'avance et/ou de changements de position de l'interrupteur de générateur (4) et/ou de l'interrupteur secteur (5) règle le clapet d'étranglement (13) sur une position de fermeture minimale et arrête au moins un cylindre (9) pour empêcher toute survitesse.

11. Moteur à combustion interne selon l'une quelconque des revendications 1 à 10, **caractérisé en ce que** le dispositif de réglage (10) en cas de variations de la vitesse du moteur à combustion interne (1) pouvant être prédéfinies à l'avance règle le clapet d'étranglement (13) sur une position de fermeture minimale et arrête au moins un cylindre (9) pour empêcher toute survitesse.

12. Moteur à combustion interne selon l'une quelconque des revendications 1 à 11, **caractérisé en ce que** le dispositif de réglage (10) après le délestage remet en circuit les cylindres arrêtés (9), de préférence les uns après les autres, en fonction d'au moins un paramètre d'état du moteur à combustion interne (1) ou du générateur (3), le clapet d'étranglement (13) restant de préférence réglé en position de fermeture minimale pendant la mise en circuit des cylindres.

13. Moteur à combustion interne selon la revendication 12, **caractérisé en ce que** le dispositif de réglage (10) remet en circuit les cylindres arrêtés (9) en fonction de la vitesse de rotation du moteur à combustion interne (1).

14. Moteur à combustion interne selon l'une quelconque des revendications 1 à 13, **caractérisé en ce qu'**il est un moteur à gaz à allumage par étincelle.

15. Moteur à combustion interne selon l'une quelconque des revendications 1 à 14, **caractérisé en ce que** le compresseur est un turbocompresseur.
